(19) Europäisches Patentamt
European Patent Office
Office européen des brevets

(11) EP 4 461 755 A1

(12) EUROPEAN PATENT APPLICATION
published in accordance with Art. 153(4) EPC

(43) Date of publication:
**13.11.2024 Bulletin 2024/46**

(21) Application number: **23882974.1**

(22) Date of filing: **16.10.2023**

(51) International Patent Classification (IPC):
***C08F 210/16*** *(2006.01)*

(52) Cooperative Patent Classification (CPC):
**C08F 210/16**

(86) International application number:
**PCT/KR2023/015918**

(87) International publication number:
**WO 2024/090867 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.10.2022 KR 20220140640**
**13.10.2023 KR 20230136794**

(71) Applicant: **LG Chem, Ltd.**
**Yeongdeungpo-gu**
**Seoul 07336 (KR)**

(72) Inventors:
- **SUNG, Yutaek**
  **Daejeon 34122 (KR)**
- **KIM, Joongsoo**
  **Daejeon 34122 (KR)**
- **LEE, Hyojoon**
  **Daejeon 34122 (KR)**

(74) Representative: **Hoffmann Eitle**
**Patent- und Rechtsanwälte PartmbB**
**Arabellastraße 30**
**81925 München (DE)**

(54) **POLYETHYLENE RESIN HAVING EXCELLENT THERMAL RESISTANCE**

(57) The present disclosure relates to a polyethylene resin having excellent thermal resistance. The polyethylene resin according to the present disclosure is excellent in both mechanical properties and thermal resistance.

**FIG. 1**

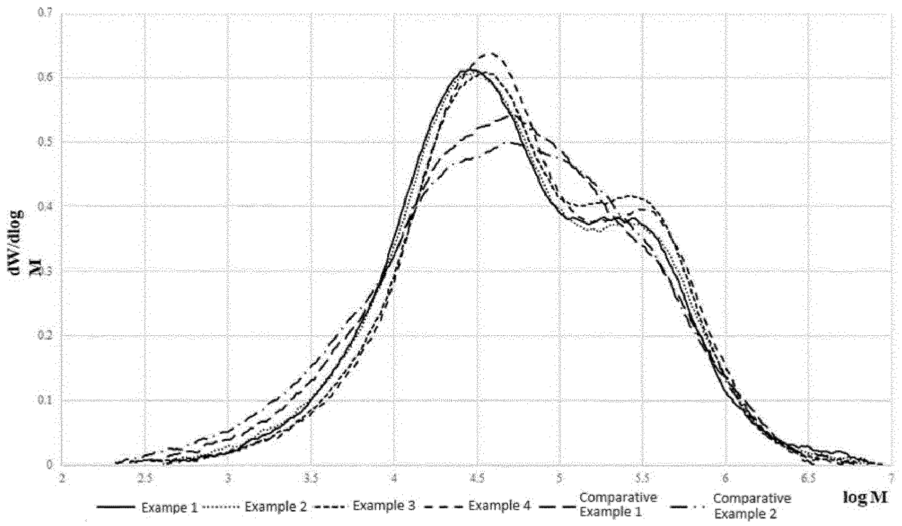




Processed by Luminess, 75001 PARIS (FR)

## Description

## BACKGROUND OF THE INVENTION

### (a) Field of the Invention

### Cross-reference to Related Application

This application claims the benefit of Korean Patent Applications No. 10-2022-0140640 filed on October 27, 2022, and No. 10-2023-0136794 filed on October 13, 2023 with the Korean Intellectual Property Office, the disclosures of which are incorporated herein by reference in their entirety.

The present disclosure relates to a polyethylene resin having excellent thermal resistance.

### (b) Description of the Related Art

High-pressure heating pipes or PE-RT (polyethylene raised temperature) pipes generally require high pressure and heat resistance, and excellent processability. The high pressure and heat resistance are a physical property that can be generally expressed in a high-density region. This is because the higher the degree of crystallinity in the polyethylene resin, the greater the strength (modulus), which increases the ability to withstand high pressure and heat.

However, when the density of the polyolefin resin is high, there is a disadvantage in that the resistance against the brittle fracture mode is deteriorated and the long-term pressure resistance is deteriorated. In addition, when the molecular weight is low or the polydispersity index is narrow, sagging phenomenon occurs during processing of large-diameter pipes, making the processing difficult. Consequently, the polyolefin resin having a high molecular weight and a very broad polydispersity index should be applied to solve these problems.

However, if the molecular weight of the polyolefin resin is high, a large extrusion load occurs and there is a limitation in that the pipe has a poor appearance due to reduced processability.

Accordingly, there is a constant demand for the manufacture of better products with a balance between mechanical properties and thermal resistance.

## SUMMARY OF THE INVENTION

In order to solve the problems of the prior art, there is provided a polyethylene resin with excellent thermal resistance and mechanical properties.

In order to solve the above problems, there is provided a polyethylene resin satisfying the following conditions 1) to 3):

1) an inflection point exists in the range of $5.0 \leq \log M \leq 6.0$ in a GPC graph having an x-axis of log M and a y-axis of dw/dlog M;
2) a tie chain probability at 110 to 120 °C is more than 2.5%; and
3) a tie chain probability at 120 to 130 °C is more than 6.3%.

The polyethylene resin according to the present disclosure is excellent in both mechanical properties and thermal resistance.

## BRIEF DESCRIPTION OF THE DRAWINGS

FIG. 1 is a GPC graph of polyethylene resins prepared in Examples and Comparative Examples of the present disclosure.

FIG. 2 is a tie chain probability graph according to temperature of polyethylene resins prepared in Examples and Comparative Examples of the present disclosure.

## DETAILED DESCRIPTION OF THE EMBODIMENTS

The terminology used herein is for the purpose of describing particular embodiments only and is not intended to be limiting of the invention. The singular forms are intended to include the plural forms as well, unless the context clearly indicates otherwise. It will be further understood that the terms "include", "have", or "contain" when used in this

specification, specify the presence of stated features, steps, components, or combinations thereof, but do not preclude the presence or addition of one or more other features, steps, components, or combinations thereof.

In addition, the terminologies "the first", "the second", "the third " and the like are used to describe a variety of components, and these terminologies are merely employed to distinguish a certain component from other components.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

The polyethylene resin according to an embodiment of the present disclosure satisfies the following conditions 1) to 3):

1) an inflection point exists in the range of 5.0 ≤ log M ≤ 6.0 in a GPC graph having an x-axis of log M and a y-axis of dW/dlog M;
2) a tie chain probability at 110 to 120 °C is more than 2.5%; and
3) a tie chain probability at 120 to 130 °C is more than 6.3%.

As the polyethylene resin according to an embodiment of the present disclosure satisfies the above conditions 1) to 3), products manufactured using the polyethylene resin, especially pipes, can exhibit improved mechanical properties and thermal resistance at the same time.

Hereinafter, the polyethylene resin according to an embodiment of the present disclosure will be described in detail.

1) Inflection point in GPC graph

The polyethylene resin according to an embodiment of the present disclosure has the characteristic of having an inflection point in the range of 5.0 ≤ log M ≤ 6.0 in a GPC graph having an x-axis of log M and a y-axis of dw/dlogM.

The GPC graph is obtained using gel permeation chromatography (GPC, manufactured by Water). Specifically, it can be measured using a polystyrene calibration method using gel permeation chromatography (GPC, manufactured by Water).

Specifically, PL-GPC220 manufactured by Waters may be used as the gel permeation chromatography (GPC) instrument, and a Polymer Laboratories PLgel MIX-B 300 mm length column may be used. An evaluation temperature may be 160 °C, and 1,2,4-trichlorobenzene may be used for a solvent at a flow rate of 1 mL/min. Each polyethylene sample may be pretreated by dissolving in 1,2,4-trichlorobenzene containing 0.0125% of butylated hydroxytoluene (BHT) at 160 °C for 10 hours using a GPC analyzer (PL-GP220), and the sample with a concentration of 10 mg/10 mL may be supplied in an amount of 200 μL. Mw and Mn may be obtained using a calibration curve formed using a polystyrene standard. 9 kinds of the polystyrene standard are used with the molecular weight of 2000 g/mol, 10000 g/mol, 30000 g/mol, 70000 g/mol, 200000 g/mol, 700000 g/mol, 2000000 g/mol, 4000000 g/mol, and 10000000 g/mol.

The existence of this inflection point results from the elasticity of the polyethylene resin by the bimodal molecular weight distribution, and excellent processability can be exhibited when manufacturing injection molded products such as pipes using this polyethylene resin.

2) Tie Chain Probability

The polyethylene resin according to an embodiment of the present disclosure has the characteristic of having a tie chain probability at 110 to 120 °C of more than 2.5%; and a tie chain probability at 120 to 130 °C of more than 6.3%.

A polyethylene resin, especially an ethylene/alpha-olefin copolymer, is a semicrystalline polymer, its crystal structure consists of lamellar and spherulite, and tie chain molecules play a role in connecting lamellae in the spherulite. Therefore, the entire crystal is well bound by these tie chain molecules, and thus physical properties of the ethylene/alpha-olefin copolymer can be improved.

The tie chain probability distribution graph can be obtained from the data of the above GPC curve graph. Specifically, the log Mw of the x-axis is the same as the x-axis of the GPC curve graph. In addition, nPdM of the y-axis can be calculated from the data obtained from the GPC curve graph. In the nPdM, n is dw/10log Mw, P can be calculated from Equation 1 below, and dM is dlogMw<x-axis data of GPC curve, X n+1> - dlogMw <x-axis data of GPC curve, Xn>.

[Equation 1]

$$P = \frac{1}{3}\frac{\int_{2l_c+l_a}^{\infty} r^2 \exp(-b^2 r^2) dr}{\int_0^{\infty} r^2 \exp(-b^2 r^2) dr}$$

in Equation 1,

r is an end-to-end distance of a random coil,
$b^2$ is $3/2\langle r\rangle^2$,
$l_c$ is a crystal thickness, and
$l_a$ is an amorphous layer thickness.

In Equation 1, $l_c$ can be calculated from Equation 2 below, wherein T is the measurement temperature (K).

[Equation 2]

$$T = T_m^0 \left(1 - \frac{2\sigma_e}{\Delta h_m l_c}\right)$$

in Equation 2,
$T_m^0$ is 415K, $\sigma_e$ is $60.9\times10^{-3}Jm^{-2}$, and $\Delta h_m$ is $2.88\times10^3Jm^{-3}$.

Further, in Equation 1, $l_a$ can be calculated from Equation 3 below, and $\langle r\rangle$ can be calculated as $2\times l_c+l_a$.

[Equation 3]

$$l_a = \rho_c l_c (1 - \omega^c)/\rho_a \omega^c$$

in Equation 3,

$\rho_c$ is a density of a crystalline phase and is 1000 kg/m$^3$,
$\rho_a$ is a density of an amorphous phase and is 852 kg/m$^3$, and
$\omega^c$ is a weight fraction crystallinity and can be measured with DSC.

The tie chain probability (P) can be derived from the following Equation 4 with the value of P obtained from the Equation 1.

[Equation 4]

$$\overline{P} = \frac{\int_0^{\infty} nPdM}{\int_0^{\infty} ndM}$$

in Equation 4,

nPdM is as described above in relation to Equation 1, and
P is the value obtained in the Equation 1.

When calculating the tie chain probability ($\overline{P}$) according to temperature as described above, the polyethylene resin according to the present disclosure has a tie chain probability of more than 2.5% at a temperature of 110 to 120 °C, and a tie chain probability of more than 6.3% at a temperature of 120 to 130 °C.

More specifically, the tie chain probability at a temperature of 110 to 120 °C is more than 2.5%, 2.55% or more, 2.6% or more, or 2.65% or more, and 3.5% or less, 3.2% or less, 3.1% or less, 2.9% or less, or 2.8% or less.

Further, the tie chain probability at a temperature of 120 to 130 °C is more than 6.3%, 6.35% or more, 6.4% or more, or 6.5% or more, and 8.0% or less, 7.8% or less, 7.5% or less, 6.9% or less, 6.8% or less, or 6.7% or less.

As the tie chain probability of polyethylene resin has the above-mentioned content range, mechanical properties are strengthened by the increase of the tie chain near the melting point, thereby exhibiting excellent heat resistance.

3) Melt index ($MI_{2.16}$)

The polyethylene resin according to an embodiment of the present disclosure has a melt index ($MI_{2.16}$) measured at 190 °C under a load of 2.16 kg according to ASTMD 1238 of 0.10 g/10 min or more.

More specifically, the polyethylene resin according to an embodiment of the present disclosure may have a melt index ($MI_{2.16}$) of 0.10 g/10 min or more, 0.13 g/10 min or more, 0.14 g/10 min or more, 0.15 g/10 min or more, or 0.16 g/10 min or more, and 2.0 g/10 min or less, 1.5 g/10 min or less, 1.4 g/10 min or less, 1.2 g/10 min or less, 1.0 g/10 min or less, 0.9 g/10 min or less, 0.8 g/10 min or less, 0.7 g/10 min or less, 0.6 g/10 min or less, 0.5 g/10 min or less, 0.4 g/10 min or less, or 0.3 g/10 min or less.

This means that the weight average molecular weight of the polyethylene resin is high and the content of high molecular weight components is high, and thus excellent mechanical properties such as high tensile strength can be exhibited.

When the melt index ($MI_{2.16}$) is too low (less than 0.10 g/10 min), flowability may be poor, which may cause a problem of slowing the linear velocity during pipe processing. When it exceeds 2.0 g/10 min, crack resistance may be lowered.

When having a low melt index as described above, the polyethylene resin of the present disclosure can satisfy excellent processability and crack resistance when manufactured for pipes.

4) Other physical properties

The polyethylene resin according to an embodiment of the present disclosure may be high density polyethylene (HDPE) having a density measured at 23 °C according to ISO 1183-2 of 0.945 g/cm$^3$ to 0.960 g/cm$^3$.

More specifically, the polyethylene resin according to an embodiment of the present disclosure may have a density of 0.945 g/cm$^3$ or more, or 0.947 g/cm$^3$ or more, and 0.960 g/cm$^3$ or less, 0.958 g/cm$^3$ or less, 0.956 g/cm$^3$ or less, 0.955 g/cm$^3$ or less, or 0.952 g/cm$^3$ or less.

The polyethylene resin according to an embodiment of the present disclosure may have a melt flow rate ratio (MFRR, $MI_{21.6}/MI_{2.16}$) measured at 190 °C according to ASTM D 1238 of 60 or more, 70 or more, 80 or more, or 90 or more, and 200 or less, 180 or less, 150 or less, 140 or less, 130 or less, 120 or less, 110 or less, or 100 or less.

The MFRR is obtained by dividing the melt index ($MI_{21.6}$) measured at 190 °C under a load of 21.6 kg according to ASTM D 1238 by the melt index ($MI_{2.16}$) measured at 190 °C under a load of 2.16 kg.

When the melt flow rate ratio is low, less than 60, crack resistance may be low, and when it is too high, more than 200, there may be a problem of poor resin flow during injection due to the high ultra-high molecular weight.

When having the above narrow melt flow rate ratio, the polyethylene resin of the present disclosure can satisfy excellent ESCR and crack resistance.

The polyethylene resin according to an embodiment of the present disclosure has a molecular weight distribution (MWD, Mw/Mn) of 7.0 to 20.0.

More specifically, the polyethylene resin according to an embodiment of the present disclosure may have a molecular weight distribution of 7.0 or more, 7.2 or more, 7.5 or more, 8.0 or more, 9.0 or more, 9.3 or more, 10.0 or more, or 11.0 or more, and 20.0 or less, 19.0 or less, 18.0 or less, 17.5 or less, 17.5 or less, 17.0 or less, 16.0 or less, 15.0 or less, 14.0 or less, 13.0 or less, 12.0 or less, or 11.5 or less.

Since it has a relatively narrow molecular weight distribution compared to the low melt index as described above, both excellent mechanical properties and tensile strength can be satisfied.

The molecular weight distribution (Mw/Mn) was calculated by obtaining the ratio of the weight average molecular

weight (Mw) to the number average molecular weight (Mn) after measuring the number average molecular weight (Mn) and the weight average molecular weight (Mw) using gel permeation chromatography (GPC).

Specifically, samples of polyethylene were evaluated using PL-GPC220 manufactured by Waters and a Polymer Laboratories PLgel MIX-B 300 mm long column. An evaluation temperature was 160°C, and 1,2,4-trichlorobenzene was used for a solvent at a flow rate of 1 mL/min. Each sample with a concentration of 10 mg/10 mL was supplied in an amount of 200 μL. Mw and Mn were obtained using a calibration curve formed using a polystyrene standard. 9 kinds of the polystyrene standard were used with the molecular weight of 2,000 / 10,000 / 30,000 / 70,000 / 200,000 / 700,000 / 2,000,000 / 4,000,000 / 10,000,000.

As it satisfies the above physical properties, the polyethylene resin according to an embodiment of the present disclosure may have S.H. (Strain Hardening) modulus measured at 80 °C according to ISO 18488 standards of 22.0 MPa or more, 22.5 MPa or more, or 23.0 MPa or more. There is no specific upper limit, because the higher S.H. modulus can be evaluated as the better. For example, the upper limit may be 35.0 MPa or less, 32.0 MPa or less, 32.0 MPa or less, or 30.0 MPa or less.

The polyethylene resin may be an ethylene homopolymer or a copolymer containing a comonomer other than ethylene. As the comonomer, alpha-olefins having 3 to 10 carbon atoms other than ethylene can be used. For examples, at least one selected from the group consisting of 1-propylene, 1-butene, 1-pentene, 1-hexene, 4-methyl-1-pentene, 1-octene, 1-decene, 1-dodecene, 1-tetradecene, 1-hexadecene, 1-octadecene, 1-eicocene, and a mixture thereof can be used. Preferably, 1-hexene can be used as the comonomer.

The polyethylene resin as described above may be prepared by copolymerizing ethylene and a comonomer while introducing hydrogen gas in the presence of a catalyst composition including a first metallocene compound represented by the following Chemical Formula 1 and a second metallocene compound represented by the following Chemical Formula 2 in a molar ratio of 1:1 to 1:8.

[Chemical Formula 1] $(Cp^1R^a)_n(Cp^2R^b)M^1Z^1_{3-n}$

in Chemical Formula 1,

$M^1$ is a Group 4 transition metal;
$Cp^1$ and $Cp^2$ are each independently cyclopentadienyl unsubstituted or substituted with a $C_{1-20}$ hydrocarbon;
$R^a$ and $R^b$ are the same as or different from each other, and are each independently hydrogen, $C_{1-20}$ alkyl, $C_{1-20}$ alkoxy, $C_{2-20}$ alkoxyalkyl, $C_{6-20}$ aryl, $C_{6-20}$ aryloxy, $C_{2-20}$ alkenyl, $C_{7-40}$ alkylaryl, $C_{7-40}$ arylalkyl, $C_{8-40}$ arylalkenyl, $C_{2-20}$ alkynyl, or a substituted or unsubstituted $C_{2-20}$ heteroaryl containing at least one heteroatom selected from the group consisting of N, O and S, provided that at least one of $R^a$ and $R^b$ is not hydrogen;
each $Z^1$ is independently halogen, $C_{1-20}$ alkyl, $C_{2-20}$ alkenyl, $C_{7-40}$ alkylaryl, $C_{7-40}$ arylalkyl, $C_{6-20}$ aryl, substituted or unsubstituted $C_{1-20}$ alkylidene, a substituted or unsubstituted amino group, $C_{2-20}$ alkylalkoxy, or $C_{7-40}$ arylalkoxy; and
n is 1 or 0;

[Chemical Formula 2]

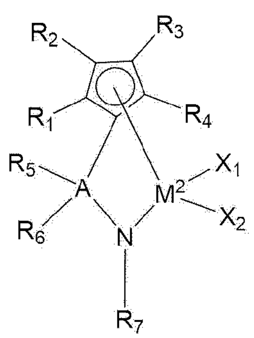

in Chemical Formula 2,

$M^2$ is a Group 4 transition metal,
A is carbon, silicon or germanium,
$X_1$ and $X_2$ are the same as or different from each other, and are each independently halogen or $C_{1-20}$ alkyl,

$R_1$ to $R_4$ are the same as or different from each other, and are each independently hydrogen, $C_{1-20}$ alkyl, $C_{2-20}$ alkenyl, $C_{6-20}$ aryl, $C_{7-20}$ alkylaryl, $C_{7-20}$ arylalkyl, or two or more of $R_1$ to $R_4$ adjacent to each other are connected to each other to form a substituted or unsubstituted aliphatic ring, a substituted or unsubstituted aromatic ring, or a substituted or unsubstituted heteroaromatic ring containing at least one selected from the group consisting of N, O and S,

$R_5$ and $R_6$ are the same as or different from each other, and are each independently $C_{1-20}$ alkyl, $C_{2-20}$ alkenyl, $C_{6-30}$ aryl, or $C_{2-20}$ alkoxyalkyl, and

$R_7$ is $C_{1-20}$ alkyl, $C_{2-20}$ alkenyl, or $C_{6-30}$ aryl.

Unless otherwise specified herein, following terms may be defined as follows.

The halogen may be fluorine (F), chlorine (Cl), bromine (Br) or iodine (I).

The $C_{1-20}$ alkyl group may be a linear, branched or cyclic alkyl group. Specifically, the $C_{1-20}$ alkyl group may be a $C_{1-15}$ linear alkyl group; a $C_{1-10}$ linear alkyl group; a $C_{1-5}$ linear alkyl group; a $C_{3-20}$ branched or cyclic alkyl group; a $C_{3-15}$ branched or cyclic alkyl group; or a $C_{3-10}$ branched or cyclic alkyl group. More specifically, the $C_{1-20}$ alkyl group may be a methyl group, an ethyl group, an n-propyl group, an iso-propyl group, an n-butyl group, an iso-butyl group, a tert-butyl group, an n-pentyl group, an iso-pentyl group, a neo-pentyl group, a cyclohexyl group or the like.

The $C_{2-20}$ alkenyl group may be a linear, branched, or cyclic alkenyl group. Specifically, the $C_{2-20}$ alkenyl group may be a $C_{2-20}$ linear alkenyl group, a $C_{2-10}$ linear alkenyl group, a $C_{2-5}$ linear alkenyl group, a $C_{3-20}$ branched alkenyl group, a $C_{3-15}$ branched alkenyl group, a $C_{3-10}$ branched alkenyl group, a $C_{5-20}$ cyclic alkenyl group, or a $C_{5-10}$ cyclic alkenyl group. More specifically, the $C_{2-20}$ alkenyl group may be an ethenyl group, a propenyl group, a butenyl group, a pentenyl group, a cyclohexenyl group, or the like.

The $C_{6-20}$ aryl may be a monocyclic, bicyclic or tricyclic aromatic hydrocarbon, and includes monocyclic or condensed aryl. Specifically, the $C_{6-20}$ aryl may be phenyl, biphenyl, naphthyl, anthracenyl, phenanthrenyl, fluorenyl, or the like.

The $C_{7-40}$ alkylaryl may be a substituent in which at least one hydrogen of the aryl is substituted with alkyl. Specifically, the $C_{7-40}$ alkylaryl may be methylphenyl, ethylphenyl, n-propylphenyl, iso-propylphenyl, n-butylphenyl, iso-butylphenyl, tert-butylphenyl, cyclohexylphenyl, or the like.

The $C_{7-40}$ arylalkyl may be a substituent in which at least one hydrogen of the alkyl is substituted with aryl. Specifically, the $C_{7-40}$ arylalkyl may be benzyl, phenylpropyl, phenylhexyl, or the like.

The $C_{6-20}$ aryloxy may be phenoxy, biphenoxy, naphthoxy, or the like, but the present disclosure is not limited thereto.

The $C_{1-20}$ alkoxy group may be a methoxy group, an ethoxy group, a phenyloxy group, a cyclohexyloxy group, or the like, but the present disclosure is not limited thereto.

The $C_{2-20}$ alkoxyalkyl group is a functional group in which at least one hydrogen of the alkyl group is substituted with an alkoxy group, and specifically, it may be an alkoxyalkyl group such as a methoxymethyl group, a methoxyethyl group, an ethoxymethyl group, an iso-propoxymethyl group, an iso-propoxyethyl group, an iso-propoxyhexyl group, a tert-butoxymethyl group, a tert-butoxyethyl group, a tert-butoxyhexyl group, or the like, but the present disclosure is not limited thereto.

The $C_{1-20}$ alkylsilyl group or the $C_{1-20}$ alkoxysilyl group is a functional group in which 1 to 3 hydrogens of $-SiH_3$ are substituted with 1 to 3 alkyl groups or alkoxy groups described above, and specifically, it may be an alkylsilyl group such as a methylsilyl group, a dimethylsilyl group, a trimethylsilyl group, a dimethylethylsilyl group, a diethylmethylsilyl group or a dimethylpropylsilyl group; an alkoxysilyl group such as a methoxysilyl group, a dimethoxysilyl group, a trimethoxysilyl group or a dimethoxyethoxysilyl group; or an alkoxyalkylsilyl group such as a methoxydimethylsilyl group, a diethoxymethylsilyl group or a dimethoxypropylsilyl group, but the present disclosure is not limited thereto.

The $C_{1-20}$ silylalkyl group is a functional group in which at least one hydrogen of the alkyl group is substituted with a silyl group, and specifically, it may be $-CH_2-SiH_3$, a methylsilylmethyl group or a dimethylethoxysilylpropyl group, or the like, but the present disclosure is not limited thereto.

The sulfonate group has a structure of $-O-SO_2-R'$, wherein R' may be a $C_{1-20}$ alkyl group. Specifically, the $C_{1-20}$ sulfonate group may be a methanesulfonate group, a phenylsulfonate group, or the like, but the present disclosure is not limited thereto.

The heteroaryl is a $C_{2-20}$ heteroaryl containing at least one of N, O, and S as a heterogeneous element, and includes monocyclic or condensed heteroaryl. Specifically, it may be xanthene, thioxanthen, a thiophene group, a furan group, a pyrrole group, an imidazole group, a thiazole group, an oxazole group, an oxadiazole group, a triazole group, a pyridyl group, a bipyridyl group, a pyrimidyl group, a triazine group, an acridyl group, a pyridazine group, a pyrazinyl group, a quinolinyl group, a quinazoline group, a quinoxalinyl group, a phthalazinyl group, a pyrido-pyrimidinyl group, a pyrido-pyrazinyl group, a pyrazino-pyrazinyl group, an isoquinoline group, an indole group, a carbazole group, a benzoxazole group, a benzoimidazole group, a benzothiazole group, a benzocarbazole group, a benzothiophene group, a dibenzothiophene group, a benzofuranyl group, a phenanthroline group, an isoxazolyl group, a thiadiazolyl group, a

phenothiazinyl group, a dibenzofuranyl group, or the like, but the present disclosure is not limited thereto.

In addition, the Group 4 transition metal may be titanium (Ti), zirconium (Zr), hafnium (Hf), or rutherpodium (Rf), and specifically titanium (Ti), zirconium (Zr), or hafnium (Hf). More specifically, it may be zirconium (Zr) or hafnium (Hf), but is not limited thereto.

In addition, the group 13 element may be boron (B), aluminum (Al), gallium (Ga), indium (In), or thallium (Tl), and specifically, boron (B), or aluminum (Al). However, it is not limited thereto.

The above-mentioned substituents may be optionally substituted with one or more substituents selected from the group consisting of a hydroxyl group; halogen; an alkyl or alkenyl, aryl, alkoxy group; an alkyl or alkenyl, aryl, alkoxy group containing at least one heteroatom of Group 14 to 16 heteroatoms; a silyl group; an alkylsilyl or alkoxysilyl group; a phosphine group; a phosphide group; a sulfonate group; and a sulfone group within the range of exhibiting the same or similar effects as the desired effects.

In addition, "two neighboring substituents are connected with each other to form an aliphatic or aromatic ring" means that the atom(s) of two substituents and the atom(s) to which the two substituents are bonded are connected with each other to form a ring. Specifically, examples in which $R_9$ and $R_{10}$ of $-NR_9R_{10}$ are connected with each other to form an aliphatic ring include a piperidinyl group, and examples in which $R_9$ and $R_{10}$ of - $NR_9R_{10}$ are connected with each other to form an aromatic ring include a pyrrolyl group.

In the catalyst composition, the first metallocene compound represented by the Chemical Formula 1 is a non-crosslinked compound including ligands of $Cp^1$ and $Cp^2$, and is advantageous for mainly producing a low molecular weight copolymer having a low SCB (short chain branch) content.

Specifically, in the Chemical Formula 1, the ligands of $Cp^1$ and $Cp^2$ may be the same or different from each other, and each may be cyclopentadienyl and substituted with one or more, or one to three $C_{1-10}$ alkyls. As the ligands of $Cp^1$ and $Cp^2$ have a pair of non-covalent electrons capable of acting as a Lewis base, high polymerization activity may be achieved. Particularly, as the ligands of $Cp^1$ and $Cp^2$ are cyclopentadienyl with relatively little steric hindrance, they exhibit high polymerization activity and low hydrogen reactivity, and thus polyethylene having a low molecular weight can be polymerized with high activity.

In addition, the ligands of $Cp^1$ and $Cp^2$ can easily control properties such as chemical structure, molecular weight, molecular weight distribution, mechanical properties, and transparency of the polyethylene to be prepared by adjusting the degree of steric hindrance effect depending on the type of the substituted functional groups. Specifically, the ligands of $Cp^1$ and $Cp^2$ are substituted with $R^a$ and $R^b$, respectively, wherein $R^a$ and $R^b$ are the same as or different from each other, and each may independently be hydrogen, $C_{1-20}$ alkyl, $C_{2-20}$ alkoxyalkyl, $C_{7-40}$ arylalkyl, or substituted or unsubstituted $C_{2-12}$ heteroaryl containing at least one heteroatom selected from the group consisting of N, O and S, and more specifically $C_{1-10}$ alkyl, $C_{2-10}$ alkoxyalkyl, $C_{7-20}$ arylalkyl, or substituted or unsubstituted $C_{4-12}$ heteroaryl containing at least one heteroatom selected from the group consisting of N, O and S.

Further, $M^1Z^1_{3-n}$ presents between the ligands of $Cp^1$ and $Cp^2$, and $M^1Z^1_{3-n}$ may affect storage stability of metal complex. In order to effectively ensure this effect, $Z^1$ may each independently be halogen or $C_{1-20}$ alkyl, and more specifically F, Cl, Br or I. In addition, $M^1$ may each independently be Ti, Zr or Hf; Zr or Hf; or Zr.

The first metallocene compound may be a compound in which each of $Cp^1$ and $Cp^2$ is an unsubstituted or substituted cyclopentadienyl group, and $R^a$ and $R^b$ are each independently hydrogen, $C_{1-10}$ alkyl, $C_{2-10}$ alkoxyalkyl, or $C_{7-20}$ arylalkyl, wherein at least one of $R^a$ and $R^b$ is an alkoxyalkyl group such as t-butoxyhexyl group, more specifically, a substituent of $-(CH_2)_p-OR^c$ (wherein $R^c$ is a linear or branched alkyl group having 1 to 6 carbon atoms, and p is an integer of 2 to 4). In addition, this case shows a low conversion to the comonomer compared to other Cp-based catalysts not including the above substituent in the preparation of polyethylene using a comonomer, so that a low molecular weight polyethylene in which the degree of copolymerization or comonomer distribution is controlled can be prepared. In addition, when the first metallocene compound having the above structure is supported on a support, the $-(CH_2)_p-OR^c$ group among the substituents can form a covalent bond through close interaction with the silanol group on the surface of the silica used as the support. Therefore, stable supported polymerization is possible.

The first metallocene compound represented by the Chemical Formula 1 may be a compound represented by one of the following structural formulae, but is not limited thereto:

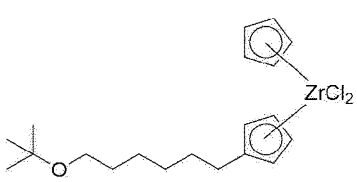
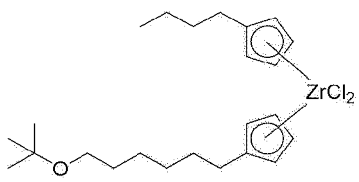
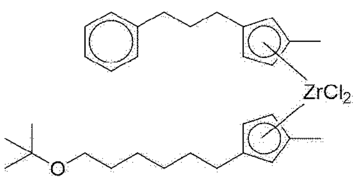

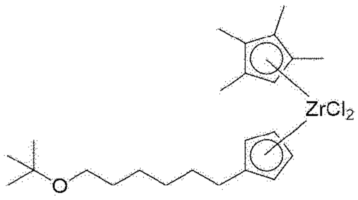
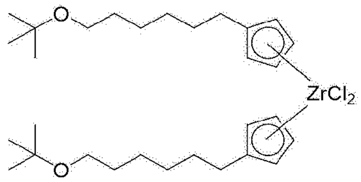
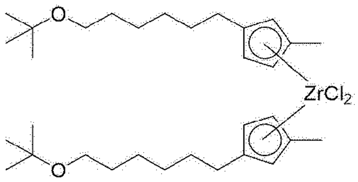

The first metallocene compound represented by the Chemical Formula 1 may be synthesized by applying known reactions, and a more detailed synthesis method may be understood with reference to Examples.

Meanwhile, in one embodiment of the present disclosure, the second metallocene compound represented by the Chemical Formula 2 includes an aromatic ring compound containing cyclopentadienyl or a derivative thereof and a nitrogen atom, and has a structure in which the aromatic ring compound and the nitrogen atom are cross-linked by $AR_5R_6$, which is a bridge group. The second metallocene compound having such a specific structure is applied to the polymerization reaction of the ethylene/1-hexene copolymer to exhibit high activity and copolymerizability, and can provide an olefin copolymer having a high molecular weight.

In particular, the second metallocene compound represented by the Chemical Formula 2 has a well-known structure of CGC (constrained geometry catalyst), so that comonomer incorporation is excellent, and the distribution of the comonomer is controlled by the electronic and steric characteristics of the ligand. These properties control ASL (average ethylene sequence length) to increase the middle and high molecular weight regions in the molecular weight distribution, thereby increasing the tie molecule fraction and the entanglement of polymer chains. Accordingly, it is easy to prepare a polyethylene resin exhibiting long-term stability and processability together with excellent pipe resistance to internal pressure.

$M^2$ of the metallocene compound represented by the Chemical Formula 2 may be a Group 4 transition metal, and may preferably be titanium (Ti), zirconium (Zr), or hafnium (Hf).

Preferably, A in Chemical Formula 2 may be silicon.

Preferably, $X_1$ and $X_2$ in Chemical Formula 2 may each independently be methyl or chlorine (Cl).

Preferably, $R_1$ to $R_4$ in Chemical Formula 2 are the same as or different from each other, and each may independently be methyl or phenyl.

Preferably, two or more of $R_1$ to $R_4$ adjacent to each other in the Chemical Formula 2 are connected with each other to form a substituted or unsubstituted aliphatic ring, a substituted or unsubstituted aromatic ring, or a substituted or unsubstituted heteroaromatic ring containing at least one selected from the group consisting of N, O and S. For example, in Chemical Formula 2, as two or more of $R_1$ to $R_4$ adjacent to each other are connected to form an aliphatic, aromatic, or heteroaromatic ring, an indenyl group, a fluorenyl group, a benzothiophene group, or a dibenzothiophene group in which cyclopentadiene is fused may be formed. In addition, the indenyl group, fluorenyl group, benzothiophene group, and dibenzothiophene group may be substituted with one or more substituents.

Preferably, $R_5$ and $R_6$ in Chemical Formula 2 may be the same as or different from each other, and may each independently be methyl, ethyl, phenyl, propyl, hexyl, or tert-butoxyhexyl.

Preferably, $R_7$ in Chemical Formula 2 may be methyl, ethyl, n-propyl, iso-propyl, n-butyl, or tert-butyl.

As the second metallocene compound capable of providing a polyethylene resin excellent in both long-term stability and processability as well as pipe resistance to internal pressure due to the increased middle and high molecular weight regions, the metallocene compound of the Chemical Formula 2 may be any one selected from the group consisting of the following compounds, but the present disclosure is not limited thereto:

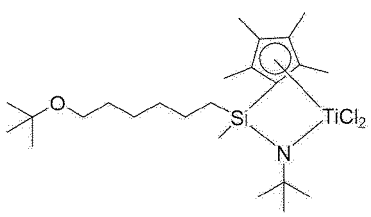
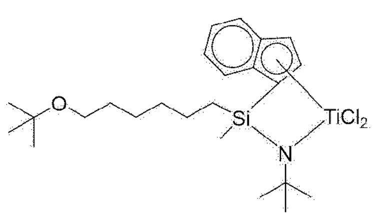
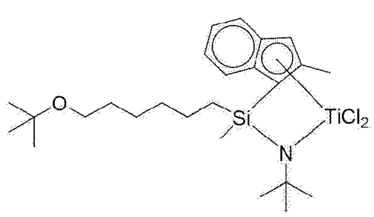

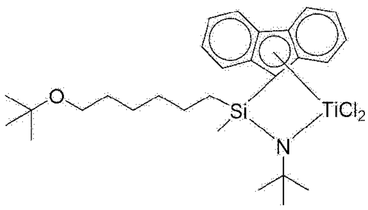

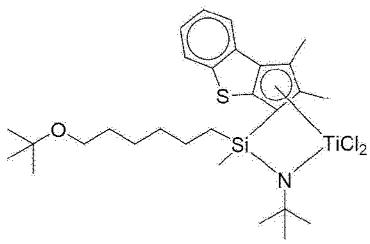

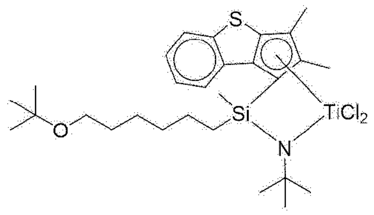

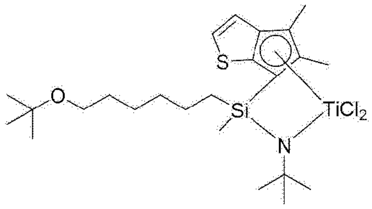

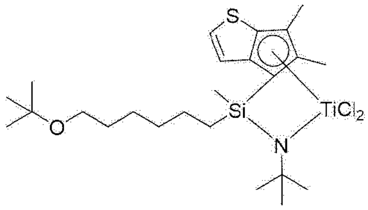

The second metallocene compound represented by the Chemical Formula 2 may be synthesized by applying known reactions. Specifically, it may be prepared by connecting a nitrogen compound and a cyclopentadiene derivative with a bridge compound to prepare a ligand compound, and then adding a metal precursor compound to perform metalation. However, the method is not limited thereto, and a more detailed synthesis method may be understood with reference to Examples.

The second metallocene compound of Chemical Formula 2 has excellent activity and can polymerize a high molecular weight polyethylene resin. In particular, even when used by being supported on a support, it exhibits high polymerization activity, so that a polyethylene resin having an ultra-high molecular weight can be prepared.

In addition, even when a polymerization reaction is performed with hydrogen to prepare a polyethylene resin having a high molecular weight along with a wide molecular weight distribution, the second metallocene compound of Chemical Formula 2 according to the present disclosure exhibits low hydrogen reactivity, so that it is possible to copolymerize a polyethylene resin having an ultra-high molecular weight with high activity. Therefore, even when used in combination with a catalyst having other characteristics, a polyethylene resin satisfying the characteristics of high molecular weight can be prepared without deterioration in activity, and thus a polyethylene resin having a wide molecular weight distribution while including a high molecular weight polyethylene resin can be easily prepared.

As described above, in the catalyst composition, the first metallocene compound represented by the Chemical Formula 1 may mainly contribute to making a low molecular weight copolymer having a low SCB content, and the second metallocene compound represented by the Chemical Formula 2 may mainly contribute to making a high molecular weight copolymer having a high SCB content. More specifically, the catalyst composition exhibits high comonomer incorporation with respect to the comonomer in the high molecular weight region of the copolymer by the second metallocene compound, and low comonomer incorporation with respect to the comonomer in the low molecular weight region of the copolymer by the first metallocene compound. As a result, a polyethylene resin exhibiting excellent heat resistance by having a bimodal molecular weight distribution with excellent mechanical properties can be prepared.

Particularly, controlling the content ratio of the first and second metallocene compounds in the catalyst composition may enable the above-described physical properties and further enhance the improvement effect. Specifically, when including the second metallocene compound in a higher content than the first metallocene compound in the catalyst composition, the middle and high molecular weight regions in the molecule are increased to increase the tie molecule fraction and the entanglement of polymer chains, thereby optimizing the ratio of the high molecular weight region and the low molecular weight region.

Specifically, the first and second metallocene compounds should be included in a molar ratio of 1:1 to 1:8. Preferably, the first and second metallocene compounds may be included in a molar ratio of 1:1 to 1:7, 1:1 to 1:6, 1:2 to 1:5, or 1:2 to 1:4. When the first and second metallocene compounds are included within the above range, the polyethylene resin manufactured using them increases the middle and high molecular weight regions, thereby increasing the tie molecule fraction and the entanglement of polymer chains. Accordingly, both mechanical properties and heat resistance can be improved

Meanwhile, the first and second metallocene compounds have the above-described structural characteristics, so they may be stably supported on a support.

In this case, the first and second metallocene compounds are used in a state supported on the support. When used as a supported catalyst, the polymer to be prepared has excellent particle shape and bulk density, and the catalyst can be suitably used in conventional slurry polymerization, bulk polymerization, and gas phase polymerization.

The support may be silica, alumina, magnesia, silica-alumina, or silica-magnesia, and it may usually contain oxides, carbonates, sulfates, or nitrates such as $Na_2O$, $K_2CO_3$, $BaSO_4$, $Mg(NO_3)_2$ and the like. Among the above-mentioned supports, the silica support has little catalyst released from the surface of the support in the propylene polymerization process, because the transition metal compound is supported by chemical bonding with a reactive functional group such as a siloxane group present on the surface of the silica support. As a result, when the polypropylene is prepared by slurry polymerization or gas phase polymerization, a fouling phenomenon, sticking to the wall surface of the reactor or with each other, may be minimized.

In addition, the support may be surface-modified by a calcination or drying process in order to increase supporting efficiency and minimize leaching and fouling. Through the surface modification step as described above, moisture on the surface of the support that inhibits the reaction with the supported component may be removed, and the content of reactive functional groups capable of chemical bonding with the supported components, for example, a hydroxyl group and a siloxane group, may be increased.

Specifically, the calcination or drying process of the support may be performed in a range from a temperature at which moisture disappears from the surface of the support to a temperature at which reactive functional groups, particularly hydroxyl groups (OH groups) present on the surface, are completely eliminated. Specifically, the temperature may be 150 to 600 °C, or 200 to 500 °C. When the temperature is low, less than 150 °C, the moisture removal efficiency is low, and as a result, the moisture remaining on the support may react with the cocatalyst to lower the supporting efficiency. When the temperature is excessibily high, higher than 600 °C, pores on the surface of the support may be combined with each other to reduce specific surface area, and many reactive functional groups such as hydroxyl groups or silanol groups may be lost from the surface, leaving only siloxane groups. Thus, reactive sites with cocatalyst may be reduced, which is not preferable.

When the first and second metallocene compounds are supported on a support and the support is silica, the first and second metallocene compounds may be supported in a total amount of 40 μmol or more, or 80 μmol or more, and 240 μmol or less, or 160 μmol or less based on 1 g of silica. When supported within the above range, it may exhibit an appropriate supporting activity, which may be advantageous in terms of maintaining the activity of the catalyst and economic feasibility.

In addition, the catalyst composition may further include a cocatalyst in terms of improving high activity and process stability.

The cocatalyst may include at least one selected from the group consisting of compounds represented by the following Chemical Formulae 3 to 5.

[Chemical Formula 3] $-[Al(R_{31})-O]_m-$

in Chemical Formula 3,

$R_{31}$ are the same as or different from each other, and are each independently halogen; $C_{1-20}$ hydrocarbon; or $C_{1-20}$ halogen-substituted hydrocarbon; and
m is an integer of 2 or more;

[Chemical Formula 4] $J(R_{41})_3$

in Chemical Formula 4,

$R_{41}$ are the same as or different from each other, and are each independently halogen; $C_{1-20}$ hydrocarbon; or $C_{1-20}$ halogen-substituted hydrocarbon; and
J is aluminum or boron;

[Chemical Formula 5] $[E-H]^+[ZD_4]^-$ or $[E]+[ZD_4]^-$

in Chemical Formula 5,

E is a neutral or cationic Lewis base;
H is a hydrogen atom;
Z is a Group 13 element; and
D are the same as or different from each other, and are each independently $C_{6-20}$ aryl or $C_{1-20}$ alkyl, wherein the $C_{6-20}$ aryl or $C_{1-20}$ alkyl is unsubstituted or substituted with at least one substituent selected from the group consisting of halogen, $C_{1-20}$ alkyl, $C_{1-20}$ alkoxy and $C_{6-20}$ aryloxy.

Specifically, the $[E-H]^+$ in Chemical Formula 5 is a Bronsted acid.

Examples of the compound represented by the Chemical Formula 3 may include an alkylaluminoxane-based compound such as methylaluminoxane, ethylaluminoxane, isobutylaluminoxane, butylaluminoxane, and the like, and any one or a mixture thereof may be used.

Examples of the compound represented by the Chemical Formula 4 may include trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, trip-tolylaluminum, dimethylaluminummethoxide, dimethylaluminumethoxide, trimethylboron, triethylboron, triisobutylboron, tripropylboron, tributylboron, and the like, and any one or a mixture thereof may be used.

Examples of the compound represented by the Chemical Formula 5 may include triethylammonium tetraphenylboron, tributylammonium tetraphenylboron, trimethylammonium tetraphenylboron, tripropylammonium tetraphenylboron, trimethylammonium tetra(p-tolyl)boron, trimethylammonium tetra(o,p-dimethylphenyl)boron, tributylammonium tetra(p-trifluoromethylphenyl)boron, trimethylammonium tetra(p-trifluoromethylphenyl)boron, tributylammonium tetrapentafluorophenylboron, N,N-diethylanilinium tetraphenylboron, N,N-diethylanilinium tetrapentafluorophenylboron, diethylammonium tetrapentafluorophenylboron, triphenylphosphonium tetraphenylboron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra(o,p-dimethylphenyl)aluminum, tributylammonium tetra(p-trifluoromethylphenyl)aluminum, trimethylammonium tetra(p-trifluoromethylphenyl)aluminum, tributylammonium tetrapentafluorophenylaluminum, N,N-diethylanilinium tetraphenylaluminum, N,N-diethylanilinium tetrapentafluorophenylaluminum, diethylammonium tetrapentatetraphenylaluminum, triphenylphosphonium tetraphenylaluminum, trimethylphosphonium tetraphenylaluminum, tripropylammonium tetra(p-tolyl)boron, triethylammonium tetra(o,p-dimethylphenyl)boron, tributylammonium tetra(p-trifluoromethylphenyl)boron, triphenylcarbonium tetra(p-trifluoromethylphenyl)boron, triphenylcarbonium tetrapentafluorophenylboron, and the like, and any one or a mixture thereof may be used.

Among the compounds described above, the cocatalyst may be, more specifically, an alkylaluminoxane-based cocatalyst such as methylaluminoxane.

Further, the alkylaluminoxane-based cocatalyst stabilizes the metallocene compounds and acts as a Lewis acid, so that further enhances catalytic activity by including a metal element capable of forming a bond with a functional group introduced into a bridge group of the second metallocene compound through Lewis acid-base interaction.

In addition, the amount of the cocatalyst used may be appropriately adjusted depending on desired properties or effects of the catalyst and the resin composition. For example, when silica is used as the support, the cocatalyst may be supported in an amount of 8 mmol or more, or 10 mmol or more, and 25 mmol or less, or 20 mmol or less based on a weight of the support, for example, 1 g of silica.

In addition, the catalyst composition described above may be used by itself for polymerization, or may be used in a prepolymerized state by contacting with propylene monomers before the use in a polymerization reaction. In this case, the preparation method according to an embodiment of the present disclosure may further include a prepolymerization step of contacting the catalyst composition with ethylene monomers before preparing the polyethylene by a polymerization reaction.

In addition, the catalyst composition may be dissolved or diluted in an aliphatic hydrocarbon solvent having 5 to 12 carbon atoms such as pentane, hexane, heptane, nonane, decane, and an isomer thereof, an aromatic hydrocarbon solvent such as toluene, and benzene, or a hydrocarbon solvent substituted with chlorine such as dichloromethane, and chlorobenzene, and then injected. The solvent used herein is preferably used after removing a small amount of water or air, which acts as a catalyst poison, by treating with a small amount of alkyl aluminum. It is also possible to further use the cocatalyst.

Meanwhile, the polymerization process may be performed by contacting ethylene and a comonomer in the presence of the above-described catalyst composition. In particular, the polymerization reaction may be performed in a single polymerization reactor.

In general, the conventional bimodal polymerization reaction uses two or more reactors depending on the number of catalysts, and is performed by adding each catalyst to each of the two or more reactors to produce polymers with different molecular weights, and then mixing them. However, this case has a problem in that uniformity is deteriorated due to different molecular weights. In contrast, the present disclosure can produce a polymer with excellent uniformity by supporting a mixture of two types of catalysts on one support and performing a monomodal polymerization reaction in a single reactor, thereby simultaneously polymerizing low molecular weight polymers and high molecular weight polymers.

In addition, the polymerization may be performed at a temperature of 25 °C to 500 °C, preferably 25 °C to 200 °C, and more preferably 50 °C to 150 °C. In addition, the polymerization may be performed at a pressure of 1 $kgf/cm^2$

to 100 kgf/cm$^2$, preferably 1 kgf/cm$^2$ to 50 kgf/cm$^2$.

In addition, in the copolymerization process, the input of 1-hexene as a comonomer may be about 4.0 wt% to about 6.0 wt% based on the total input weight of ethylene. More specifically, the 1-hexene input may be about 4.1 wt% or more, about 4.2 wt% or more, about 4.3 wt% or more, about 4.4 wt% or more, or about 4.5 wt% or more, and about 5.9 wt% or less, about 5.8 wt% or less, 5.6 wt% or less, about 5.4 wt% or less, about 5.2 wt% or less, or about 5.0 wt% or less.

Meanwhile, the polyethylene resin according to the present disclosure may be prepared by copolymerizing ethylene and a comonomer in the presence of the above-described catalyst composition while introducing hydrogen gas in a single polymerization reactor.

For example, the hydrogen gas may be introduced in an amount of 35 ppm to 250 ppm, 40 ppm to 200 ppm, 50 ppm to 190 ppm, 55 ppm to 180 ppm, 58 ppm to 170 ppm, or 60 ppm to 145 ppm based on the weight of ethylene. The above hydrogen gas content maintains the chain propagation and chain transfer rate almost constant, and optimizes the content of the high molecular weight region and the low molecular weight region of the polymer with an optimized molecular weight distribution. Thus, the hydrogen gas content may be within the above-mentioned range in terms of improving long-term stability and processability during pipe processing and securing excellent pressure resistance.

According to another embodiment of the present disclosure, there is also provided a pipe such as a high-pressure heating pipe or a PE-RT pipe manufactured using the polyethylene resin.

Hereinafter, preferred embodiments are presented to facilitate the understanding of the invention. However, the following examples are for illustrative purposes only and are not intended to limit the present disclosure.

## <Examples>

### Preparation of catalyst precursor

### Synthesis Example 1: Preparation of first metallocene compound (1)

t-butyl-O-$(CH_2)_6$-Cl was prepared by the method shown in Tetrahedron Lett. 2951 (1988) using 6-chlorohexanol, and reacted with cyclopentadienyl sodium (NaCp) to obtain t-butyl-O-$(CH_2)_6$-$C_5H_5$ (yield 60%, b.p. 80 °C/ 0.1 mmHg).

In addition, t-butyl-O-$(CH_2)_6$-$C_5H_5$ was dissolved in tetrahydrofuran (THF) at -78 °C, and normal butyllithium (n-BuLi) was slowly added thereto. Thereafter, it was heated to room temperature and reacted for 8 hours. The lithium salt solution synthesized as described above was slowly added to a suspension solution of $ZrCl_4(THF)_2$ (1.70 g, 4.50 mmol)/THF(30 mL) at -78 °C, and further reacted for about 6 hours at room temperature. All volatiles were dried under vacuum and the resulting oily liquid material was filtered by adding a hexane solvent. The filtered solution was dried under vacuum, and hexane was added to obtain a precipitate at a low temperature (-20 °C). The obtained precipitate was filtered at a low temperature to obtain [t-Bu-O-$(CH_2)_6$-$C_5H_4]_2ZrCl_2$ compound (1) in the form of a white solid (yield 92%).

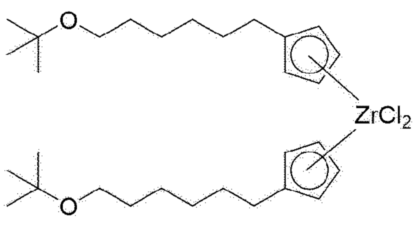

(1)

$^1$H NMR (300 MHz, $CDCl_3$): 6.28 (t, J = 2.6 Hz, 2 H), 6.19 (t, J = 2.6 Hz, 2 H), 3.31 (t, 6.6 Hz, 2 H), 2.62 (t, J = 8 Hz), 1.7 - 1.3 (m, 8 H), 1.17 (s, 9 H).

$^{13}$C NMR ($CDCl_3$): 135.09, 116.66, 112.28, 72.42, 61.52, 30.66, 30.61, 30.14, 29.18, 27.58, 26.00.

### Synthesis Example 2: Preparation of second transition metal compound (2)

#### 2-1) Preparation of ligand compound

50 g of Mg(s) was added to a 10 L reactor at room temperature, followed by 300 mL of THF. 0.5 g of $I_2$ was added, and the reactor temperature was maintained at 50 °C. After the reactor temperature was stabilized, 250 g of 6-t-butoxyhexyl chloride was added to the reactor at a rate of 5 mL/min using a feeding pump. It was observed that the reactor temperature rose by 4 °C to 5 °C with the addition of 6-t-butoxyhexylchloride. It was stirred for 12 hours while

continuously adding 6-t-butoxyhexylchloride. After reaction for 12 hours, a black reaction solution was obtained. 2 mL of the black solution was taken, and water was added thereto to obtain an organic layer. The organic layer was confirmed to be 6-t-butoxyhexane through $^1H$-NMR. From this, it was confirmed that Grignard reaction was well performed. Thus, 6-t-butoxyhexyl magnesium chloride was synthesized.

500 g of methylsilyltrichloride ($MeSiCl_3$) and 1 L of THF were introduced to a reactor, and then the reactor temperature was cooled down to -20 °C. 560 g of the 6-t-butoxyhexyl magnesium chloride synthesized above was added to the reactor at a rate of 5 mL/min using a feeding pump. After completion of the feeding of Grignard reagent, the mixture was stirred for 12 hours while slowly raising the reactor temperature to room temperature. After reaction for 12 hours, it was confirmed that white $MgCl_2$ salt was produced. 4 L of hexane was added thereto and the salt was removed through a labdori to obtain a filtered solution. After the filtered solution was added to the reactor, hexane was removed at 70 °C to obtain a pale yellow liquid. The obtained liquid was confirmed to be methyl(6-t-butoxy hexyl)dichlorosilane through $^1H$-NMR.

$^1H$-NMR ($CDCl_3$): 3.3 (t, 2H), 1.5 (m, 3H), 1.3 (m, 5H), 1.2 (s, 9H), 1.1 (m, 2H), 0.7 (s, 3H).

1.2 mol (150 g) of tetramethylcyclopentadiene and 2.4 L of THF were added to the reactor, and then the reactor temperature was cooled down to -20 °C. 480 mL of n-BuLi was added to the reactor at a rate of 5 ml/min using a feeding pump. After n-BuLi was added, the mixture was stirred for 12 hours while slowly raising the reactor temperature to room temperature. After reaction for 12 hours, an equivalent of methyl(6-t-butoxy hexyl)dichlorosilane (326 g, 350 mL) was rapidly added to the reactor. The mixture was stirred for 12 hours while slowly raising the reactor temperature to room temperature. Then, the reactor temperature was cooled to 0 °C again, and 2 equivalents of t-$BuNH_2$ was added. The mixture was stirred for 12 hours while slowly raising the reactor temperature to room temperature. After reaction for 12 hours, THF was removed. Thereafter, 4 L of hexane was added and the salt was removed through a labdori to obtain a filtered solution. The filtered solution was added to the reactor again, and hexane was removed at 70 °C to obtain a yellow solution. The yellow solution obtained above was confirmed to be methyl(6-t-butoxyhexyl)(tetramethylCpH)t-butylaminosilane through $^1H$-NMR.

**2-2) Preparation of metallocene compound**

$TiCl_3(THF)_3$ (10 mmol) was rapidly added to a dilithium salt of a ligand at -78 °C, which was synthesized from n-BuLi and the ligand compound of dimethyl(tetramethylCpH)t-butylaminosilane synthesized in 3-1 in THF solution. While slowly heating the reaction solution from -78 °C to room temperature, it was stirred for 12 hours. After stirring for 12 hours, an equivalent of $PbCl_2$ (10 mmol) was added to the reaction solution at room temperature, and then stirred for 12 hours. After stirring for 12 hours, a dark black solution with a blue tinge was obtained. THF was removed from the resulting reaction solution, and then hexane was added to filter the product. Hexane was removed from the filtered solution, and then the product was confirmed to be $(tBu\text{-}O\text{-}(CH_2)_6)(CH_3)Si(C_5(CH_3)_4)(tBu\text{-}N)TiCl_2$ compound (3), ([methyl(6-t-buthoxyhexyl)silyl(η5-tetramethylCp)(t-Butylamido)]$TiCl_2$), through $^1H$-NMR.

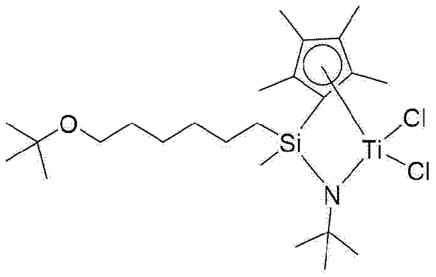

(2)

$^1H$-NMR ($CDCl_3$): 3.3 (s, 4H), 2.2 (s, 6H), 2.1 (s, 6H), 1.8 ~ 0.8 (m), 1.4 (s, 9H), 1.2(s, 9H), 0.7 (s, 3H).

**Preparation of supported catalyst**

**Preparation Example** 1: **Preparation of hybrid supported catalyst**

3.0 kg of toluene solution was added to a 20 L stainless steel (sus) high pressure reactor, and the reactor temperature was maintained at 40 °C. 500 g of silica (SP2212, manufactured by Grace Davison) dehydrated at a temperature of 600 °C for 12 hours under vacuum was added to the reactor and sufficiently dispersed, and then 2.78 kg of a 10 wt% methylaluminoxane (MAO)/toluene solution was added thereto, followed by stirring at 200 rpm at 80 °C for 15 hours or more.

After lowering the reactor temperature to 40 °C, 60 g of the first metallocene compound of the following precursor (1) prepared in Synthesis Example 1/toluene solution (7.8 wt% in toluene) was added to the reactor and stirred at 200 rpm for 1 hour. Then, 230 g of the second metallocene compound of the following precursor (2) prepared in Synthesis Example 2/toluene solution (7.8 wt% in toluene) was added to the reactor and stirred at 200 rpm for 1 hour. Herein, the molar ratio of the first metallocene compound and the second metallocene compound was 1:2.5 (the number of moles of first metallocene compound: the number of moles of second metallocene compound).

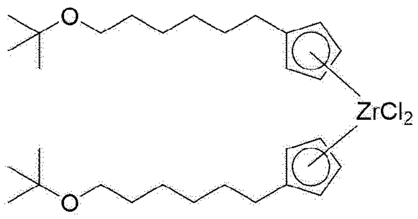
(1)

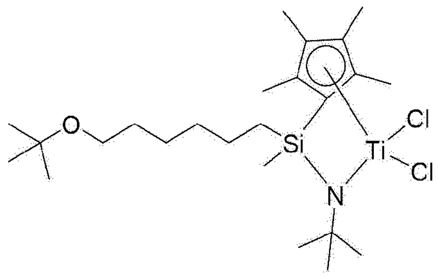
(2)

70 g of a cocatalyst (anilinium tetrakis(pentafluorophenyl)borate) was diluted in toluene, and then added to the reactor, followed by stirring at 200 rpm for 15 hours or more. After lowering the reactor temperature to room temperature, the stirring was stopped, followed by settling for 30 minutes and decantation of the reaction solution.

The toluene slurry was transferred to a filter dryer and filtered. After adding 3.0 kg of toluene and stirring for 10 minutes, the stirring was stopped and filtration was performed. After adding 3.0 kg of hexane to the reactor and stirring for 10 minutes, the stirring was stopped and filtration was performed. It was dried under reduced pressure at 50 °C for 4 hours to prepare 500g-$SiO_2$ supported catalyst.

**Preparation Example 2: Preparation of hybrid supported catalyst**

A hybrid supported catalyst was prepared in the same manner as in Preparation Example 1, except that the molar ratio of the first metallocene compound and the second metallocene compound was changed to 1:3 in Preparation Example 1.

**Examples 1 to 2**

An ethylene/1-hexene copolymer was polymerized in one loop-type slurry reactor using the hybrid supported metallocene catalyst prepared in Preparation Example 1 under the conditions shown in Table 1 below.

**Examples 3 to 4**

An ethylene/1-hexene copolymer was polymerized in one loop-type slurry reactor using the hybrid supported metallocene catalyst prepared in Preparation Example 2 under the conditions shown in Table 1 below.

[Table 1]

| | Example 1 | Example 2 | Example 3 | Example 4 |
|---|---|---|---|---|
| Catalyst (precursor molar ratio) | Prep. Ex. 1 metallocene catalyst (precursor (1):(2)=1: 2.5) | Prep. Ex. 1 metallocene catalyst (precursor (1):(2)=1: 2.5 | Prep. Ex. 2 metallocene catalyst (precursor (1):(2)=1: 3) | Prep. Ex. 2 metallocene catalyst (precursor (1):(2)=1: 3) |
| Ethylene input (kg/hr) | 33.0 | 33.0 | 33.0 | 33.0 |
| Comonomer type | 1-Hexene (1-C6) | 1-Hexene (1-C6) | 1-Hexene (1-C6) | 1-Hexene (1-C6) |
| Comonomer input to ethylene (wt%) | 1.15 | 1.37 | 1.12 | 1.12 |

(continued)

| | Example 1 | Example 2 | Example 3 | Example 4 |
|---|---|---|---|---|
| Hydrogen input (ppm) | 110 | 120 | 110 | 105 |
| Polymerizatio n temperature (°C) | 93.0 | 93.0 | 93.0 | 95.0 |
| Catalytic activity (kgPE/g Cat.hr) | 5.5 | 6.0 | 7.5 | 6.5 |

**Comparative Example 1**

XRT70, HDPE from Total, was used as Comparative Example 1.

**Comparative Example 2**

049RT, HDPE from SSTPC, was used as Comparative Example 2.

**<Experimental Examples>**

The physical properties of the polyethylene resins of Examples and Comparative Examples were measured in the following manner.

(1) Melt index ($MI_{2.16}$, unit: g/10min): It was measured at 190 °C under a load of 2.16kg in accordance with ASTM D 1238.

(2) Melt flow rate ratio (MFRR, $MI_{21.6}$/ $MI_{2.16}$): It was obtained by dividing $MI_{21.6}$ measured at 190 °C under a load of 21.6kg in accordance with ASTM D1238 by $MI_{2.16}$ measured at 190 °C under a load of 2.16kg.

(3) Density (unit: g/cm$^3$): It was measured in accordance with ASTM D1505.

(4) GPC graph

The GPC graph was obtained using gel permeation chromatography (GPC, manufactured by Water). Specifically, PL-GPC220 manufactured by Waters was used as the gel permeation chromatography (GPC) instrument, and a Polymer Laboratories PLgel MIX-B 300 mm length column was used. An evaluation temperature was 160 °C, and 1,2,4-trichlorobenzene was used for a solvent at a flow rate of 1 mL/min. Each polyethylene sample was pretreated by dissolving in 1,2,4-trichlorobenzene containing 0.0125% of butylated hydroxytoluene (BHT) at 160 °C for 10 hours using a GPC analyzer (PL-GP220), and the sample with a concentration of 10 mg/10 mL was supplied in an amount of 200 μL. Mw and Mn were obtained using a calibration curve formed using a polystyrene standard. 9 kinds of the polystyrene standard were used with the molecular weight of 2000 g/mol, 10000 g/mol, 30000 g/mol, 70000 g/mol, 200000 g/mol, 700000 g/mol, 2000000 g/mol, 4000000 g/mol, and 10000000 g/mol.

GPC graphs of Examples and Comparative Examples are shown in FIG. 1.

(5) Tie Chain Probability

It was calculated by the Equations 1 to 4 described above with the data of the GPC curve and the melting point measured as described above.

Tie chain probability graphs according to temperature of Examples and Comparative Examples are shown in FIG. 2 and Table 1.

(6) S.H. Modulus (unit: MPa): It was measured at 80 °C in accordance with ISO 18488 standards.

The tie chain probability according to temperature is shown in Table 2 below, and other physical properties are shown in Table 3 below.

[Table 2]

| Category | | Ex. 1 | Ex. 2 | Ex. 3 | Ex. 4 | Comp. Ex. 1 | Comp. Ex. 2 |
|---|---|---|---|---|---|---|---|
| Tie chain probability according to temperature | 30-40 °C | 0.030756 | 0.075904 | 0.081311 | 0.082757 | 0.089008 | 0.042634 |
| | 40-50 °C | 0.049808 | 0.185851 | 0.186828 | 0.180834 | 0.21954 | 0.10954 |
| | 50-60 °C | 0.063473 | 0.280097 | 0.288247 | 0.265136 | 0.328 | 0.177942 |
| | 60-70 °C | 0.109124 | 0.390479 | 0.400438 | 0.372176 | 0.44414 | 0.260973 |
| | 70-80 °C | 0.175808 | 0.520372 | 0.538951 | 0.511824 | 0.575726 | 0.377596 |
| | 80-90 °C | 0.327609 | 0.682822 | 0.721251 | 0.695393 | 0.755514 | 0.575537 |
| | 90-100 °C | 0.648909 | 0.974997 | 1.04165 | 1.041297 | 1.037396 | 0.921216 |
| | 100-110 °C | 1.280605 | 1.486411 | 1.647601 | 1.643421 | 1.502932 | 1.490789 |
| | 110-120 °C | 2.742578 | 2.653598 | 3.071279 | 3.016229 | 2.376731 | 2.7119 |
| | 120-130 °C | 6.501769 | 6.565118 | 7.661577 | 7.079588 | 4.948726 | 6.180951 |
| | 130-140 °C | 0.836382 | 0.60571 | 0.457311 | 0.565915 | 0.941699 | 0.649251 |

[Table 3]

| | Ex. 1 | Ex. 2 | Ex. 3 | Ex. 4 | Comp. Ex. 1 | Comp. Ex. 2 |
|---|---|---|---|---|---|---|
| Presence or absence of inflection points in 5.0 ≤ log M ≤ 6.0 in GPC graph (O,X) | ○ | ○ | ○ | ○ | X | X |
| $MI_{2.16}$ (g/10min) | 0.19 | 0.16 | 0.14 | 0.13 | 0.14 | 0.15 |
| Density (g/cm$^3$) | 0.947 | 0.947 | 0.946 | 0.946 | 0.949 | 0.949 |
| MFRR ($MI_{21.6}$/ $MI_{2.16}$) | 96 | 99 | 94 | 84 | 108 | 87 |
| MWD (Mw/Mn) | 11.4 | 11.4 | 9.4 | 11.3 | 13.2 | 17.4 |
| S.H. Modulus (MPa) | 22.8 | 23.4 | 23.6 | 23.1 | 22.4 | 22.1 |

Referring to Tables 2 and 3, Examples 1 to 4 according to an embodiment of the present disclosure, in which an inflection point exists in the range of 5.0 ≤ log M ≤ 6.0 in the GPC graph, a tie chain probability at 110 to 120 °C is more than 2.5% and a tie chain probability at 120 to 130 °C is more than 6.3%, have higher S.H. modulus compared to Comparative Examples 1 and 2, which are known polyethylene resins, thereby confirming excellent heat resistance.

## Claims

**1.** A polyethylene resin satisfying the following conditions 1) to 3):

1) an inflection point exists in the range of 5.0 ≤ log M ≤ 6.0 in a GPC graph having an x-axis of log M and a y-axis of dW/dlog M;
2) a tie chain probability at 110 to 120 °C is more than 2.5%; and
3) a tie chain probability at 120 to 130 °C is more than 6.3%.

**2.** The polyethylene resin of Claim 1,
wherein the polyethylene resin has a bimodal molecular weight distribution.

**3.** The polyethylene resin of Claim 1, wherein a melt index ($MI_{2.16}$) is 0.10 to 2.0 g/10min.

**4.** The polyethylene resin of Claim 1, wherein a density is 0.945 to 0.960 g/cm$^3$.

**5.** The polyethylene resin of Claim 1, wherein a molecular weight distribution (Mw/Mn) is 7 to 20.

**6.** The polyethylene resin of Claim 1, wherein a melt flow rate ratio (MFRR, $MI_{21.6}$/ $MI_{2.16}$) measured at 190 °C according to ASTM D1238 is 60 to 200.

**7.** The polyethylene resin of Claim 1, wherein the polyethylene resin is an ethylene/1-hexene copolymer.

**8.** The polyethylene resin of Claim 1, wherein S.H. (Strain Hardening) modulus measured at 80 °C according to ISO 18488 standards is 22.0 MPa or more.

FIG. 1

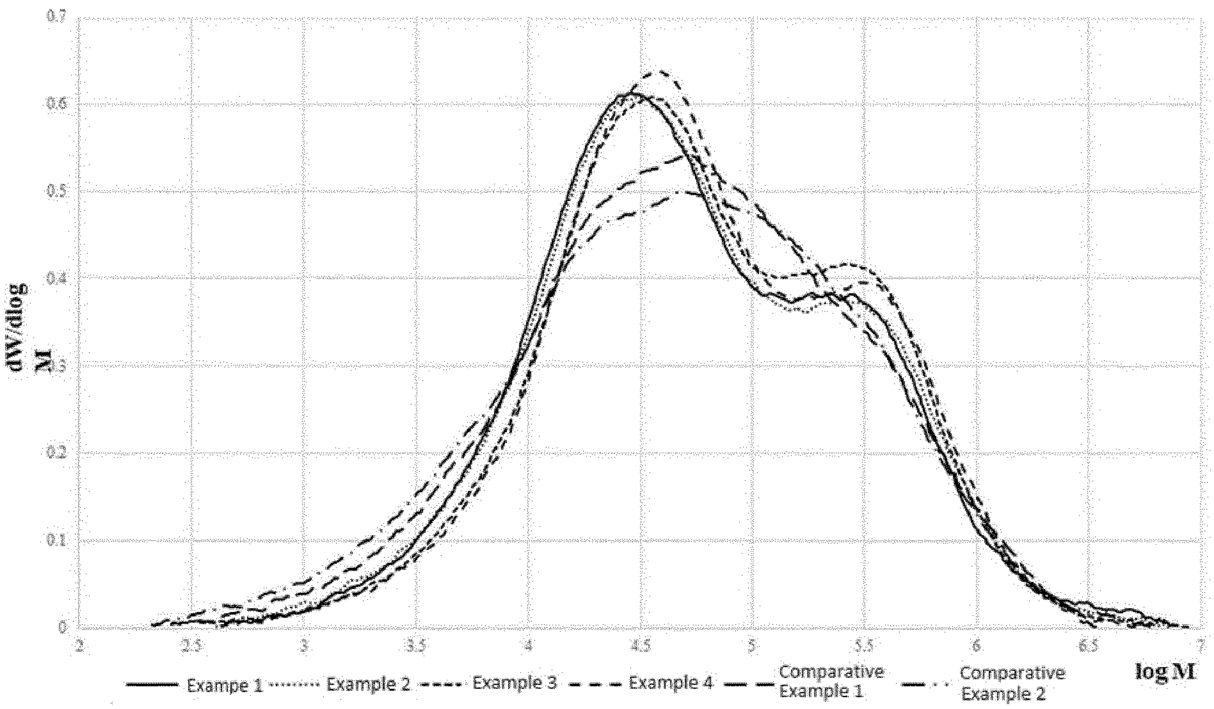
dW/dlog M
log M
0
0.1
0.2
0.3
0.4
0.5
0.6
0.7
2
2.5
3
3.5
4
4.5
5
5.5
6
6.5
7
Exampe 1
Example 2
Example 3
Example 4
Comparative Example 1
Comparative Example 2

FIG. 2

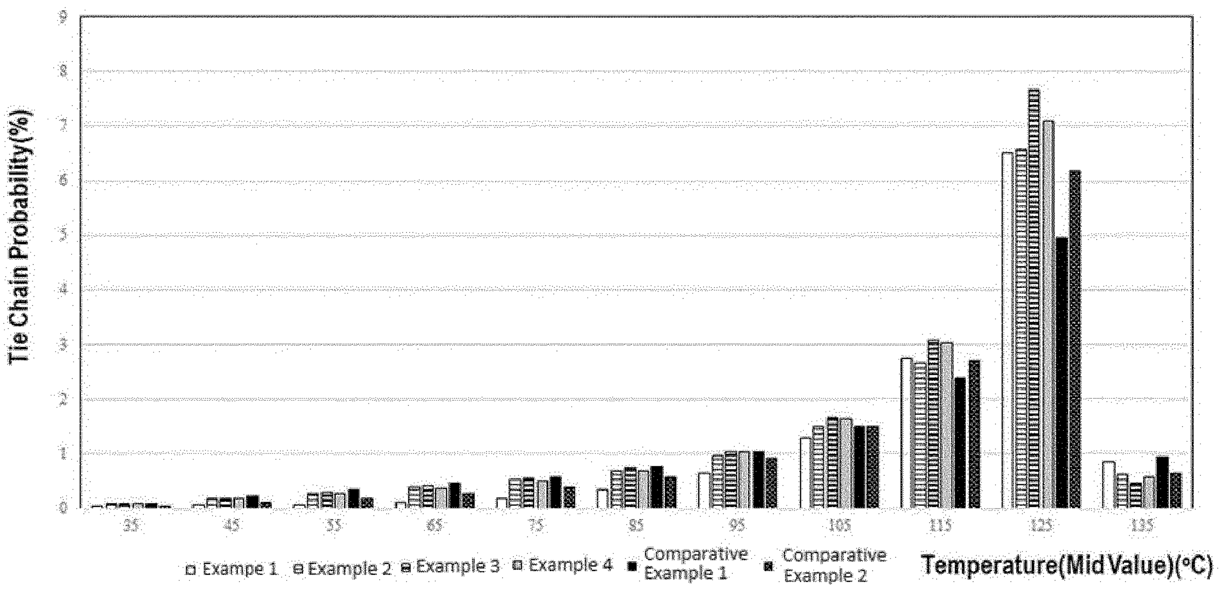
Tie Chain Probability(%)
Temperature(Mid Value)(°C)
0
1
2
3
4
5
6
7
8
9
35
45
55
65
75
85
95
105
115
125
135
Exampe 1
Example 2
Example 3
Example 4
Comparative Example 1
Comparative Example 2

## INTERNATIONAL SEARCH REPORT

International application No.
**PCT/KR2023/015918**

**A. CLASSIFICATION OF SUBJECT MATTER**

**C08F 210/16**(2006.01)i

According to International Patent Classification (IPC) or to both national classification and IPC

**B. FIELDS SEARCHED**

Minimum documentation searched (classification system followed by classification symbols)

C08F 210/16(2006.01); C07C 11/04(2006.01); C08F 10/00(2006.01); C08F 2/01(2006.01); C08F 210/14(2006.01); C08F 4/64(2006.01); C08F 4/6592(2006.01); C08L 23/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에틸렌(polyethylene), 에틸렌(ethylene), 1-헥센(1-hexene), 바이모달(bimodal), 메탈로센 촉매(metallocene catalyst), 내열성(thermal resistance)

**C. DOCUMENTS CONSIDERED TO BE RELEVANT**

| Category* | Citation of document, with indication, where appropriate, of the relevant passages | Relevant to claim No. |
|---|---|---|
| X | KR 10-2021-0038357 A (LG CHEM, LTD.) 07 April 2021 (2021-04-07) See paragraphs [0033]-[0042], [0068], [0073]-[0075], [0096]-[0127], [0129]-[0144], [0156], [0157], [0159], [0161]-[0166], [0181], [0182], [0186], [0188], [0248]-[0254], [0256]-[0262], [0264]-[0266], [0268]-[0271], [0273]-[0276], [0278]-[0283], [0285]-[0289], [0291]-[0295], [0304]-[0306] and [0341]-[0343]; table 1; and figure 1. | 1-8 |
| A | KR 10-2019-0061652 A (LOTTE CHEMICAL CORPORATION) 05 June 2019 (2019-06-05) See claims 1-10. | 1-8 |
| A | KR 10-2022-0081292 A (HANWHA SOLUTIONS CORPORATION) 15 June 2022 (2022-06-15) See claims 1-17. | 1-8 |
| A | KR 10-2015-0063885 A (LG CHEM, LTD.) 10 June 2015 (2015-06-10) See claims 1-8. | 1-8 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **16 January 2024** | **16 January 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/015918**

**C. DOCUMENTS CONSIDERED TO BE RELEVANT**

| Category* | Citation of document, with indication, where appropriate, of the relevant passages | Relevant to claim No. |
|---|---|---|
| A | JP 2004-528428 A (DOW GLOBAL TECHNOLOGIES INCORPORATED) 16 September 2004 (2004-09-16) See claims 1-10. | 1-8 |

Form PCT/ISA/210 (second sheet) (July 2022)

**INTERNATIONAL SEARCH REPORT**
**Information on patent family members**

International application No.
**PCT/KR2023/015918**

| Patent document cited in search report | | | Publication date (day/month/year) | Patent family member(s) | | | Publication date (day/month/year) |
|---|---|---|---|---|---|---|---|
| KR | 10-2021-0038357 | A | 07 April 2021 | CN | 113166322 | A | 23 July 2021 |
| | | | | EP | 3872102 | A1 | 01 September 2021 |
| | | | | JP | 2022-507058 | A | 18 January 2022 |
| | | | | JP | 7134553 | B2 | 12 September 2022 |
| | | | | KR | 10-2526767 | B1 | 27 April 2023 |
| | | | | US | 2022-0017667 | A1 | 20 January 2022 |
| | | | | WO | 2021-066437 | A1 | 08 April 2021 |
| KR | 10-2019-0061652 | A | 05 June 2019 | | None | | |
| KR | 10-2022-0081292 | A | 15 June 2022 | CN | 116601188 | A | 15 August 2023 |
| | | | | EP | 4261238 | A1 | 18 October 2023 |
| | | | | WO | 2022-124695 | A1 | 16 June 2022 |
| KR | 10-2015-0063885 | A | 10 June 2015 | KR | 10-1658172 | B1 | 20 September 2016 |
| JP | 2004-528428 | A | 16 September 2004 | EP | 1381647 | A1 | 21 January 2004 |
| | | | | US | 2004-0106739 | A1 | 03 June 2004 |
| | | | | WO | 02-072692 | A1 | 19 September 2002 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- KR 1020220140640
- KR 1020230136794

### Non-patent literature cited in the description

- *Tetrahedron Lett.,* 1988, vol. 2951